# EUROPÄISCHE PATENTSCHRIFT

(11) **EP 1 541 978 B1**
(45) Veröffentlichungstag und Bekanntmachung des Hinweises auf die Patenterteilung: **28.03.2007**
(21) Anmeldenummer: 03104652.7
(22) Anmeldetag: 11.12.2003
(51) Int. Cl.: G01G 23/00

(54) **Verfahren und Vorrichtung zur Überwachung der Ausrichtung einer Messvorrichtung und Messvorrichtung**
Method and device for monitoring the orientation of a measuring device and measuring device
Procédé et dispositif pour contrôler l'orientation d'un dispositif de mesure et dispositif de mesure

(43) Veröffentlichungstag der Anmeldung: 15.06.2005
(73) Patentinhaber: Mettler-Toledo AG, 8606 Greifensee (CH)
(72) Erfinder: Künzi, Hansruedi, 8606, Greifensee (CH); Leisinger, Roger, 8044, Zürich (CH)

(56) Entgegenhaltungen:
- DE-A- 3 234 372
- DE-A- 19 931 679
- DE-C- 4 316 046
- DE-C- 4 320 494
- GB-A- 2 234 812
- US-A1- 2002 100 868
- PATENT ABSTRACTS OF JAPAN Bd. 0071, Nr. 13 (P-197), 18. Mai 1983 (1983-05-18) & JP 58 033114 A (FUJITSU KK), 26. Februar 1983 (1983-02-26)

## Beschreibung

Die vorliegende Erfindung betrifft ein Verfahren und eine mit einem Neigungssensor versehene Vorrichtung zur Überwachung der Ausrichtung einer Messvorrichtung sowie eine mit dieser Überwachungsvorrichtung versehene Messvorrichtung, insbesondere eine Waage.

Messgeräte, insbesondere gravimetrische Messgeräte, wie beispielsweise Thermogravimetriegeräte, Messgeräte zur gravimetrischen Feuchtigkeitsbestimmung oder Waagen müssen hinsichtlich ihrer Aufstellung besonderen Anforderungen genügen. Insbesondere mit einer Wägezelle und einem Lastaufnehmer versehene Waagen, welche die gravimetrische Messung von Gewichten erlauben, werden idealerweise derart positioniert, dass die Achse der Waage - parallel zu der die Gewichtskraft eines zu messenden Wägeguts auf den Lastaufnehmer einwirken soll - in Richtung der Gravitationsachse verläuft. Diese ideale Position kann auch als Bezugslage der Waage bezeichnet werden. Eine Neigung der Waagenachse, normalerweise eine Normale zur Waagschalenebene, gegenüber der Gravitationsachse führt hingegen zu einem Wägeresultat, das dem Wert entspricht, der aus der Multiplikation des Cosinus des Neigungswinkels mit dem tatsächlichen Gewicht des Wägeguts resultiert.

Aus diesem Grunde werden eichfähige Waagen häufig mit einem Neigungssensor und einer Nivelliereinrichtung versehen, mit deren Hilfe die Waage in die vom Neigungssensor angezeigte Bezugslage gebracht werden kann. Die Sensorsignale eines elektrischen Neigungssensors, die beispielsweise einer Anzeigeeinheit zugeführt werden, geben dabei die Neigung der Sensorachse, die normalerweise parallel zur Waagenachse ausgerichtet ist, gegenüber der Gravitationsachse wieder. Die Nivelliereinrichtung, die beispielsweise zwei axial justierbare Stellfüsse der Waage umfasst, erlaubt, eine Abweichung der Sensor- und somit der Waagenachse von der Gravitationsachse zu korrigieren.

Aus [1], DE 32 34 372 A1 ist eine Waage mit einem elektrischen Neigungssensor bekannt, dessen Sensorsignale nicht zur Korrektur der Lage der Waage, sondern zur digitalen Korrektur der neigungsabhängigen Fehler der Waage verwendet werden. Gemäss [1] kann der Neigungssensor eine beweglich aufgehängte Masse oder einen Behälter aufweisen, der unter Bildung einer Gasblase teilweise mit Flüssigkeit gefüllt ist, wobei die Abtastung der beweglichen Elemente optisch oder induktiv erfolgt.

Ein elektrischer Neigungssensor bestehend aus einer Libelle, die einen unter Bildung einer Gasblase teilweise mit einer elektrisch leitfähigen Flüssigkeit gefüllten Behälter aufweist, ist in [2], JP 61 108 927 A2 offenbart. Dieser Neigungssensor wird gemäss [2] in einer Waage eingesetzt, wobei nach Erreichen eines Grenzwerts der Schräglage ein akustischer Alarm ausgelöst wird.

Der prinzipielle Aufbau einer Libelle ist in [3], DE 38 00 155 A1 näher beschrieben. Die dort gezeigten Libellen erlauben, einen Neigungswinkel von Auge abzulesen.

Die JP 58033114 A [5] offenbart eine Libelle mit einem Licht emittierenden Element auf der einen Seite und mehreren optischen Sensoren auf deren anderer Seite. Eine Licht übertragende, gefärbte Flüssigkeit ist in einem halbkugelförmigen Behälter derart eingeschlossen, dass eine Blase gebildet wird. Der Behälter selbst ist in einem kubischen, transparenten Gehäuse eingeschlossen. Die optischen Sensoren sind an der Aussenseite des kubischen Gehäuses angeordnet.

In der DE 43 16 046 C1 [6] wird ein optoelektronisches Neigungsmesssystem mit einem, als doppeltes Parallelfedergelenksystem ausgebildeten Verformungspendel, dem eine Sende- und eine Empfangseinheit zugeordnet sind, beschrieben. Nebst einer Sensordiode können noch Referenzdioden empfängerseitig angeordnet sein, die der Erfassung und Kompensation der Wirkung unerwünschter Einflussfaktoren wie Temperatur- und Spannungsänderungen dienen.

In der DE 199 31 679 A1 [7] wird ein elektronisches Inklinometer mit sehr hoher Empfindlichkeit beschrieben, das eine Libelle aufweist an deren Unterseite eine Lichtquelle angeordnet ist. Die Oberseite der Libelle wird von einem optoelektronischen Sensor, vorzugsweise einem solchen auf CCD-Basis, überspannt.

Sofern keine automatische Überwachung der Neigung der Waage vorgesehen ist, ist bei qualitätsrelevanten Wägevorgängen vorgeschrieben, die Lage der Waage durch einen Blick auf die Libelle zu kontrollieren, bevor der Wägevorgang stattfindet. In der Praxis geschieht dies jedoch nicht immer regelmässig. Bei der automatischen Überwachung können hingegen Fehler bei der Überwachungsvorrichtung auftreten. Einerseits ist es möglich, dass ein Alarm ausgelöst wird, obwohl der Neigungswinkel einen vorgesehenen Grenzwert nicht überschritten hat. Andererseits ist es möglich, dass der Grenzwert, gegebenenfalls während einer langen Betriebszeit, überschritten wurde, ohne dass ein Alarm ausgelöst wurde. Bei beiden Fehlerarten resultieren unter Umständen schwerwiegende Folgen. Bei der ersten Fehlerart werden aufgrund von Fehlalarmen, so genannten "false positives", Mess- und/oder Produktionsprozesse unnötigerweise unterbrochen. Bei der zweiten Fehlerart, so genannten "false negatives", werden Mess- und/oder Produktionsprozesse weiter geführt, obwohl festgelegte Mess- und/oder Produktionstoleranzen überschritten wurden.

Der vorliegenden Erfindung liegt daher die Aufgabe zugrunde, ein verbessertes Verfahren und eine verbesserte mit einem Neigungssensor versehene Vorrichtung zur Zustandsüberwachung einer Messvorrichtung, insbesondere einer Waage, sowie eine mit dieser Vorrichtung versehene Messvorrichtung, insbesondere eine Waage zu schaffen.

Insbesondere sind ein Verfahren und eine Überwachungsvorrichtung zu schaffen, mittels derer die Überschreitung wenigstens eines Grenzwerts für den Neigungswinkel präzise erfasst werden kann, und bei denen das Auftreten von Falschmeldungen bzw. Falschalarmen praktisch vermieden wird.

Die Überwachungsvorrichtung soll zudem einfach aufgebaut, kostengünstig realisierbar und in einer Waage oder weiteren Messvorrichtungen einfach verwendbar sein. Ferner sollen Änderungen von Eigenschaften von Vorrichtungsteilen, wie elektrischen oder optischen Bauteilen, die Überwachung der Waage ebenso wenig stören, wie äussere Einwirkungen, z.B. Streulicht.

Die erfindungsgemässe Messvorrichtung soll daher hinsichtlich der Neigung optimal überwachbar sein.

Diese Aufgabe wird mit einem Verfahren, einer Überwachungsvorrichtung und einer Messvorrichtung gelöst, welche die in Anspruch 1, 8 bzw. 14 angegebenen Merkmale aufweisen. Vorteilhafte Ausgestaltungen der Erfindung sind in weiteren Ansprüchen angegeben.

Das Verfahren und die Vorrichtung dienen der Überwachung der Ausrichtung einer Messvorrichtung, insbesondere einer Waage. Dazu weist die Überwachungsvorrichtung einen nach dem Prinzip einer Libelle arbeitenden Neigungssensor mit einem Behälter auf, der unter Bildung einer Blase mit einer Flüssigkeit gefüllt ist.

Die Position der Blase ist optisch mittels eines auf einer Seite der Blase angeordneten, der Abgabe einer Strahlung dienenden Strahlungselements und eines auf der dazu gegenüberliegenden Seite der Blase angeordneten, dem Empfang der Strahlung dienenden Sensorelements messbar. Durch das Strahlungselement, vorzugsweise eine Leuchtdiode, und das Sensorelement, vorzugsweise eine Photodiode, wird dabei die Sensorachse definiert, in Bezug auf welche die Blase konzentrisch liegt, falls die Sensorachse parallel zur Gravitationsachse verläuft.

Ferner ist beidseits des Sensorelements wenigstens je ein dem Empfang der Strahlung dienendes Referenzelement vorgesehen, mit denen geprüft wird, ob die Intensität der Strahlung in einem zulässigen Bereich liegt. Zur Kontrolle der Überwachungsvorrichtung wird selbsttätig innerhalb der Überwachungsvorrichtung ein Funktionstest durchgeführt.

Änderungen der Intensität der vom Strahlungselement abgegeben und/oder von den Referenzelementen empfangenen Strahlung, die beispielsweise durch Änderung der Leistungszufuhr an das Strahlungselement oder durch Verfärbung der Elemente im Strahlengang verursacht werden, können daher festgestellt und korrigiert werden. Dadurch wird beispielsweise vermieden, dass bei zu tiefer Intensität der vom Strahlungselement abgegebenen Strahlung angenommen wird, die Blase liege in der Sensorachse und würde die vom Strahlungselement abgegebene Strahlung dämpfen, obwohl die Blase ausserhalb der Sensorachse liegt, wodurch fälschlicherweise eine im Toleranzbereich liegende, zulässige Neigung registriert wird. Ferner wird vermieden, dass bei zu hoher Intensität der vom Strahlungselement abgegebenen Strahlung angenommen wird, die Blase liege ausserhalb der Sensorachse und würde die vom Strahlungselement abgegebene Strahlung nicht dämpfen, obwohl die Blase konzentrisch zur Sensorachse liegt, wodurch fälschlicherweise eine ausserhalb des Toleranzbereichs liegende, unzulässige Neigung registriert wird.

Mittels des einfach aufgebauten Neigungssensors kann daher eine zu hohe oder zu tiefe Intensität der Strahlung registriert und, wie nachstehend beschrieben, mit einfachen Massnahmen korrigiert werden.

Der elektronisch überwachte Neigungssensor bzw. die Libelle kann dabei eingeschlossen, innerhalb des Gehäuses des Messgeräts angeordnet werden. Bei dieser Anordnung ist der Neigungssensor gegen Einwirkungen von Fremdlicht abgeschirmt. Eine Kontrolle der Position der Blase von Auge ist daher jedoch nicht mehr möglich.

In einer vorzugsweisen Ausgestaltung hingegen wird der Neigungssensor bzw. die Libelle derart am Gehäuse angeordnet, dass die Position der Blase von Auge kontrolliert werden kann, wodurch die elektronische Überwachung durch die Möglichkeit der visuellen Kontrolle durch den Anwender ergänzt wird. Aufgrund der geringen Grösse des Strahlungselements, ist dieses bei der visuellen Überwachung der Blase nicht störend. Einwirkungen von Fremdlicht, welche die elektronische Überwachung stören könnten, werden vorzugsweise vermieden, indem Strahlungs-, Sensor- und Referenzelemente in einem Wellenlängenbereich, beispielsweise im Infrarotbereich, arbeiten, der im wesentlichen ausserhalb der Wellenlänge des störenden Fremdlichts liegt.

Fremdeinflüsse bei der Messung können weiter unterdrückt werden, indem die Strahlung periodisch oder aperiodisch in Pulsen, vorzugsweise in Intervallen im Bereich von 5 ms bis 15 ms, vorzugsweise mit Pulsbreiten von 5 µs bis 15 µs, beispielsweise mit einer stabilen oder leicht schwankenden Periodendauer von 10 ms und einer Pulsbreite von 5 µs abgeben wird. Die gewünschte Strahlungsintensität wird durch die Änderung der Höhe der Pulse bestimmt. Durch Schwankungen der Periodendauer können periodisch auftretende Störsignale weiter unterdrückt werden.

Die Referenzelemente sind vorzugsweise auf einer durch das Sensorelement führenden Gerade derart angeordnet, so dass die von den Referenzelementen empfangene Strahlung nicht durch die Blase hindurch tritt, falls diese konzentrisch zur Sensorachse liegt. Vom Sensorelement wird daher ein Signal abgegeben, das zu einer von der Blase gedämpften Strahlung korrespondiert, während von den Referenzelementen ein Signal abgegeben wird, das zu einer von der Blase nicht gedämpften Strahlung korrespondiert. Die von den Referenzelementen gemessene Strahlung kann daher als Referenz verwendet werden, die zur Korrektur der Strahlungsintensität verwendbar ist. Mit zusätzlichem Schaltungsaufwand könnte das vom Sensorelement abgegebene Signal auch anhand eines von den Referenzelementen abgegebenen Signals, das zur ungedämpften Strahlung korrespondiert, normiert werden, so dass ein von der Intensität der vom Strahlungselement abgegebenen Strahlung unabhängiges Signal erzielt werden könnte.

Am vorteilhaftesten erfolgt die Auswertung der von den Sensor- und den Referenzelementen abgegebenen Signale jedoch mittels Komparatoren. Dabei wird das Ausgangssignal des Sensorelements mit einem ersten Schwellwert verglichen, der ein Mass für den im Bereich einer zulässigen Neigung liegenden Abstand der Blase von der Sensorachse ist. Die Ausgangssignale der beiden Referenzelemente werden mittels eines Fensterkomparators mit einem unteren zweiten Schwellwert und einem oberen dritten Schwellwert verglichen, wobei die beiden Schwellwerte den Bereich der zulässigen Intensität der Strahlung und somit den Bereich der dem Strahlungselement zuzuführenden elektrischen Leistung bestimmen.

Die Ausgangssignale aller Komparatoren werden periodisch abgetastet und in einem Prozessor verarbeitet, wobei vorzugsweise
a) nach jedem Unter- oder Überschreiten eines einen Neigungsfehler anzeigenden ersten Schwellwerts ein Neigungszähler hin zu einem ersten bzw. zweiten Grenzwert verändert wird, und/oder
b) nach jedem Unterschreiten eines eine zu tiefe Intensität der Strahlung anzeigenden zweiten Schwellwerts ein Intensitätszähler von einem dritten zu einem vierten Grenzwert verändert wird, und/oder
c) nach jedem Überschreiten des eine zu hohe Intensität anzeigenden dritten Schwellwerts der Intensitätszähler vom vierten gegen den dritten Grenzwert verändert wird, und/oder
d) nach Registrierung eines Fehlers während einer Testsequenz ein Funktionszähler hin zu einem fünften Grenzwert verändert wird, und/oder
e) nach Registrierung eines Fehlers während der Neigungsmessung der Funktionszähler hin zum fünften oder ein Fehlerzähler hin zu einem sechsten Grenzwert verändert wird.

Durch die Verwendung des Neigungszählers, des Intensitätszählers, des Funktionszählers und des Fehlerzählers können nur kurzeitig, gegebenenfalls einmalig auftretende Störungen unterdrückt werden, so dass unnötige Fehlermeldungen vermieden werden.

Bei Erreichen des ersten oder zweiten Grenzwerts wird eine innerhalb oder ausserhalb des Toleranzbereichs liegende Neigung signalisiert und ein Mess- oder Produktionsprozess gegebenenfalls angehalten.

Bei Erreichen des dritten oder vierten Grenzwerts wird die Intensität der Strahlung bzw. die dem Strahlungselement zugeführte elektrische Leistung entsprechend verändert, so dass die Intensität der Strahlung in einen zulässigen Bereich zurückgeführt wird.

Bei Erreichen des fünften oder sechsten Grenzwerts wird ein entsprechender Fehler signalisiert und der Messprozess oder auch ein Produktionsprozess wird gegebenenfalls angehalten.

Möglich ist selbstverständlich auch, die Fehlermeldungen ungefiltert zu verarbeiten.

Alle diese Filterfunktionen können mit geringem Aufwand mittels einer Softwareanwendung realisiert werden. Alle Grenzwerte sind vorzugsweise in einem elektronischen Speicher abgelegt und wahlweise änderbar. Die Schwellwerte sind vorzugsweise mittels vom Prozessor steuerbarer Widerstände, beispielsweise Transistoren, wahlweise einstellbar. Ebenso ist die an das Strahlungselement pulsweise anlegbare Betriebsspannung vorzugsweise durch den Prozessor steuerbar.

Nachfolgend wird die Erfindung anhand von Zeichnungen näher erläutert. Dabei zeigen:
- Figur 1: eine erfindungsgemässe Waage 1000 mit einem für den Anwender sichtbar in das Waagengehäuse integrierten Neigungssensor 1;
- Figur 2: einen mit dessen Achse sx parallel zur Gravitationsachse gx ausgerichteten Neigungssensor 1' bestehend aus einer Libelle mit einem zylindrischen, beidseits mit transparenten Platten abgedeckten Behälter 10, der unter Bildung einer Blase 12 mit einer Flüssigkeit 11 gefüllt ist und an dessen Oberseite ein Strahlungselement D1 und an dessen Unterseite ein Sensorelement D2 angeordnet ist;
- Figur 3: den nach rechts geneigten Neigungssensor 1' von Figur 2;
- Figur 4: einen erfindungsgemässen Neigungssensor 1 bestehend aus einer Libelle gemäss Figur 2 an deren Oberseite ein Strahlungselement D1 und an deren Unterseite ein Sensorelement D2 und zwei Referenzelemente D3, D3' angeordnet sind;
- Figur 5: den nach links geneigten Neigungssensor 1 von Figur 4;
- Figur 6: eine an den Neigungssensor 1 von Figur 4 angeschlossene Schaltungsanordnung;
- Figur 7: den Verlauf der Eingangssignale u_{E11}, u_{E12} an einem dem Sensorelement D2 zugeordneten ersten Komparator CMP1 in der Schaltungsanordnung von Figur 6 bei der in Figur 4 gezeigten Ausrichtung des Neigungssensors 1;
- Figur 8: den Verlauf der Eingangssignale u_{E11}, u_{E12} am ersten Komparator CMP1 bei der in Figur 5 gezeigten Ausrichtung des Neigungssensors 1;
- Figur 9: einen typischen Verlauf der Eingangssignale U_{E21}, u_{E22} bzw. u_{E31}, u_{E32} an einem zweiten und einem dritten Komparator CMP2; CMP3, die einem Referenzelement D3 bzw. D3' zugeordnet sind;
- Figur 10: die erfindungsgemässe Überwachungsvorrichtung mit einem Prozessor 4, dem die Ausgangssignale des Neigungssensors 1 über eine als A/D-Wandler 3 dienende Komparatorstufe 3 zugeführt werden, der über einen D/A-Wandler 2 mit dem Strahlungselement D1 des Neigungssensors 1 verbunden ist und der mit einer Ein-/Ausgabeeinheit 5 verbunden ist.
- Figur 11: ein erstes Diagramm, aus dem im Prozessor 4 ablaufende Arbeitsschritte ersichtlich sind;
- Figur 12: ein zweites Diagramm, aus dem die Arbeitsschritte des in Figur 11 genannten Funktionstests ersichtlich sind; und
- Figur 13: einen Neigungssensor 1 in einer weiteren vorzugsweisen Ausgestaltung.

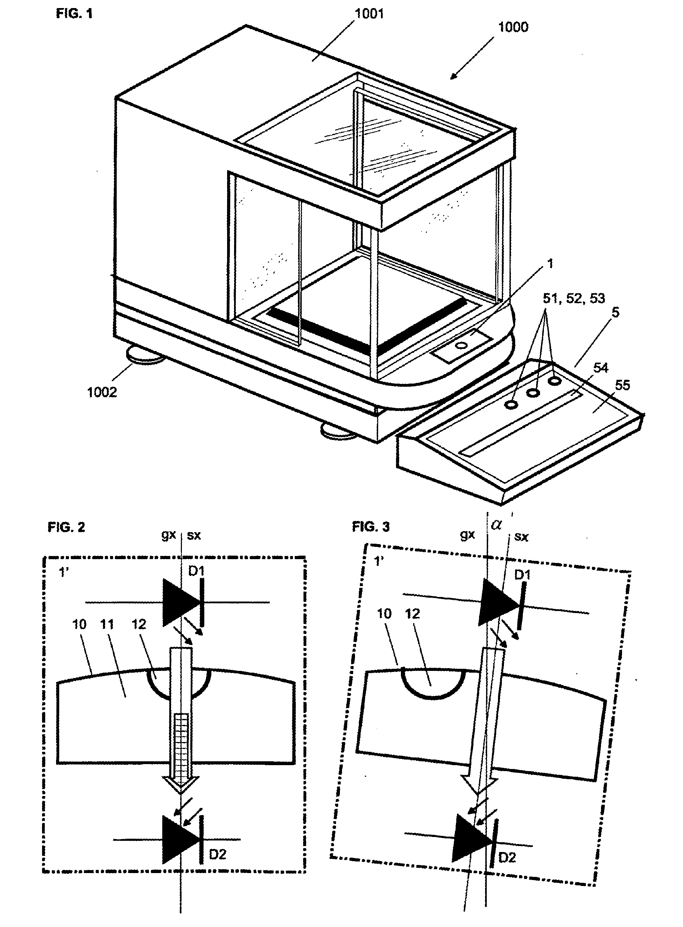

Figur 1 zeigt eine erfindungsgemässe Waage 1000 mit einem für den Anwender sichtbar in das Waagengehäuse 1001 integrierten, nach dem Prinzip einer Libelle arbeitenden Neigungssensor 1, der Teil einer erfindungsgemässen Überwachungsvorrichtung ist. Der Neigungssensor 1, dessen Ausgangssignale in der Überwachungsvorrichtung anhand eines Prozessors verarbeitet werden, erlaubt daher auch die visuelle Überwachung durch den Anwender. Fehlermeldungen der Überwachungsvorrichtung lassen sich daher durch einen Blick auf die Libelle bzw. die Neigungsvorrichtung 1 leicht verifizieren, wodurch ein erhöhter Bedienungskomfort der Waage 1000 resultiert. Neigungsfehler lassen sich mittels höhenjustierbarer Stellfüsse 1002 korrigieren.

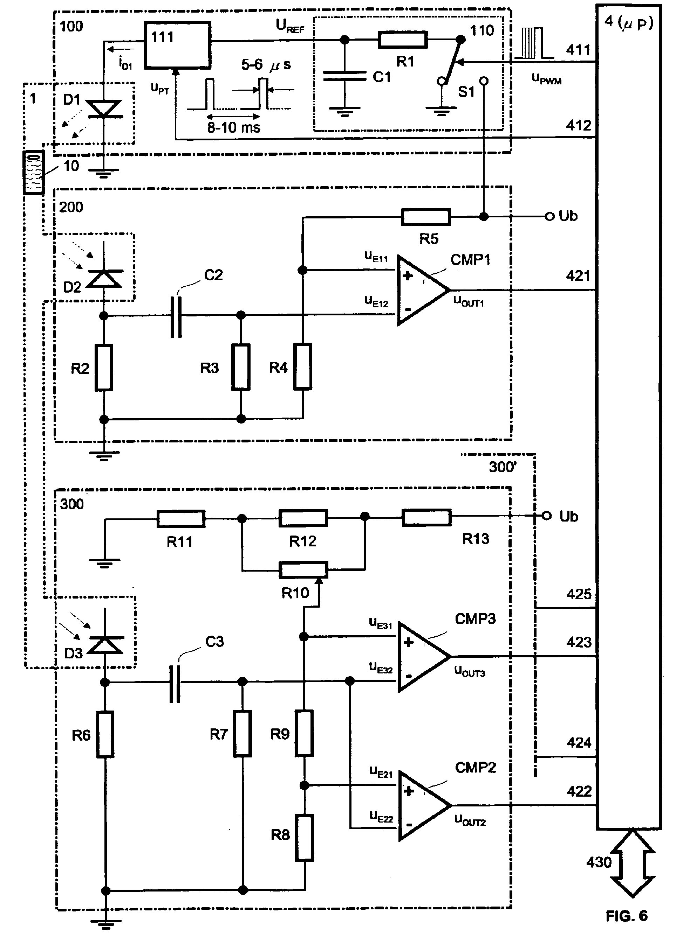

Figur 2 zeigt in schematischer Darstellung einen mit seiner Achse sx parallel zur Gravitationsachse gx ausgerichteten Neigungssensor 1' bestehend aus einer Libelle mit einem vorzugsweise zylindrischen Behälter 10, der unter Bildung einer Blase 12 mit einer Flüssigkeit 11 gefüllt ist und an dessen Oberseite ein Strahlungselement D1 und an dessen Unterseite ein Sensorelement D2 angeordnet ist. In Figur 3 ist der Neigungssensor 1' um den Winkel α nach rechts geneigt, so dass die Sensorachse sx gegenüber der Gravitationsachse gx entsprechend geneigt ist. Der Behälter 10 ist beidseits mit transparenten Platten abgeschlossen, von denen die obere, an der die Blase 12 anliegt, innenwandig leicht gewölbt ist. In Figur 2 liegt die Blase 12 auf der Sensorachse sx, die durch die Lage des Strahlungselements D1 und des Sensorelements D2 definiert ist. In Figur 3 hat sich die Blase 12 aufgrund der Neigung des Behälters 10 nach links verschoben. In Figur 2 verläuft die vom Strahlungselement D1 abgegebene Strahlung daher durch die Blase 12 und wird aufgrund von Brechungs- und Reflexionseffekten entsprechend gedämpft. In Figur 3 wird die Strahlung durch die Blase 12 nicht gedämpft, so dass vom Sensorelement D2 ein höheres Ausgangssignal abgegeben wird. Das Ausgangssignal des Sensorelements D2 kann daher einem Komparator, beispielsweise dem in Figur 6 gezeigten Komparator CMP1, zugeführt und mit einem Schwellwert u_{E11} verglichen werden, der derart gewählt ist, dass das Ausgangssignal des Sensorelements D2 bei Empfang von der Blase 12 gedämpfter Strahlung unterhalb und bei Empfang von der Blase 12 nicht gedämpfter Strahlung oberhalb dieses Schwellwerts u_{E11} liegt. Das Ausgangssignal u_{OUT1} des Komparators CMP1 zeigt daher mit einem Wert logisch "1" eine innerhalb eines Toleranzbereichs liegende und mit einem Wert logisch "0" eine ausserhalb des Toleranzbereichs liegende Drehung des Neigungssensors 1 bzw. Neigung der Waage 1000 an.

Komparatoren dieser Art sind in [4], U. Tietze, Ch. Schenk, Halbleiterschaltungstechnik, 11. Auflage, 1. Nachdruck, Springer Verlag, Berlin 1999, Seiten 610-612 beschrieben.

Durch Veränderungen der vom Strahlungselement D1 abgegebenen Strahlungsintensität, beispielsweise aufgrund geänderter Energiezufuhr oder temperaturabhängiger Bauelementeigenschaften; durch erhöhte Dämpfung im Strahlengang, beispielsweise aufgrund von Verfärbungen der transparenten Platten; oder durch Änderung der Bauelementeigenschaften des Sensorelements D2, kann dessen Ausgangssignal sich jedoch soweit ändern, dass die Neigung der Waage 1000 anhand des vorliegenden Schwellwerts u_{E11} nicht mehr korrekt überwacht werden kann. Die Nachjustierung des Schwellwerts u_{E11} würde jedoch einen erheblichen Aufwand verursachen.

Erfindungsgemäss wird daher ein Neigungssensor 1 bestehend aus einer Libelle gemäss Figur 2 verwendet, an deren Oberseite ein Strahlungselement D1 und an deren Unterseite ein Sensorelement D2 und zwei Referenzelemente D3, D3' angeordnet sind. Durch das Strahlungselement D1 und das Sensorelement D2 wird wiederum die Sensorachse sx definiert, in der die Blase 12 liegt, solange die Sensorachse sx etwa parallel zur Gravitationsachse gx ausgerichtet ist. Die Referenzelemente D3, D3' sind beidseits des Sensorelements D1 vorzugsweise derart angeordnet, dass die vom Strahlungselement D1 abgegebene Strahlung durch die in der Sensorachse sx liegende Blase 12 nicht gedämpft wird.

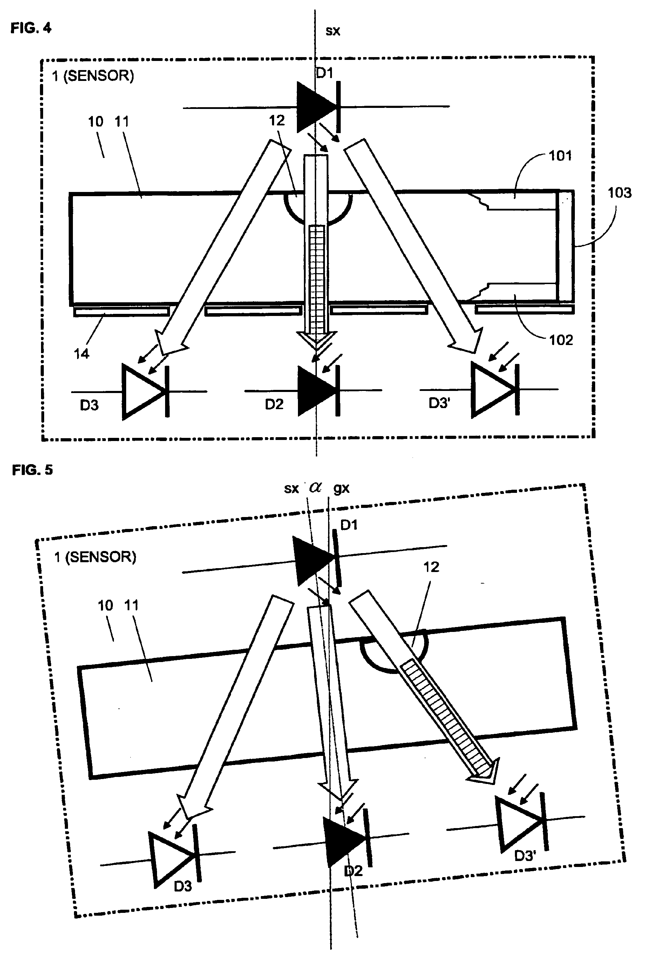

In Figur 4 sind ferner Teile des Behälters 10, der eine obere und eine untere Glasplatte 101, 102 aufweist, die in einem zylindrischen Rohrstück 103 gehalten sind und unter Bildung der Blase 12 die Flüssigkeit 11 einschliessen, beispielhaft dargestellt. Auf der unteren Glasplatte 102 ist ferner eine Blende 14 mit Öffnungen angeordnet, durch die die vom Strahlungselement D1 abgegebene Strahlung zu den Sensor- und Referenzelementen D2, D3, D3' hindurch treten kann, durch die Fremdlicht, das aus einer anderen Richtung einfällt, hingegen abgeschirmt wird. Eine weitere an sich bekannte Möglichkeit, die Einwirkungen von Fremdlicht zu reduzieren, besteht darin, das Strahlungselement D1 und/oder das Sensorelement D2 bzw. die Referenzelemente D3, D3' mit einem schmalbandigen optischen Filter zu versehen.

In Figur 5 ist der Neigungssensor 1 um den Winkel α nach links gedreht, so dass sich die Blase 12 nach rechts verschiebt und die Strahlung vom Strahlungselement D1 das Sensorelement D2 weitgehend ungedämpft erreicht. Hingegen liegt die Blase nun im Strahlengang vom Strahlungselement D1 zum zweiten Referenzelement D3'. Das erste Referenzelement D3 empfängt die Strahlung jedoch noch immer ungedämpft. Umgekehrte Verhältnisse ergeben sich, falls der Neigungssensor 1 um den Winkel α nach rechts gedreht wird. In diesem Fall ist die Strahlung vom Strahlungselement D1 zum zweiten Referenzelement D3' weitgehend ungedämpft.

Mittels der Referenzelemente D3, D3' kann die Intensität der empfangenen Strahlung daher überwacht werden. Durch den Vergleich der Ausgangssignale der Referenzelemente D3, D3' mit zwei Schwellwerten u_{E21}, u_{E31} (siehe die Eingangsspannungen an den Komparatoren CMP2, CMP3 in Figur 6) kann festgestellt werden, ob die Intensität der Strahlung in einem zulässigen Bereich liegt. Sofern eines der Ausgangssignale der Referenzelemente D3, D3' über dem höheren Schwellwert u_{E31} liegt, ist die Strahlungsintensität zu hoch. Sofern beide Ausgangssignale der Referenzelemente D3, D3' unter dem tieferen Schwellwert u_{E21} liegen, ist die Strahlungsintensität zu tief. Nach Prüfung der Strahlungsintensität kann daher eine gegebenenfalls notwendige Korrektur eingeleitet werden.

Dazu ist in der in Figur 6 gezeigten Schaltungsanordnung in einem Sendermodul 100 eine steuerbare Stromquelle 111 vorgesehen, von der dem Strahlungselement D1 ein Betriebsstrom i_{D1} zuführbar ist, dessen Höhe von einer Referenzspannung U_{REF} abhängig ist und der in Abhängigkeit eines Steuersignals u_{PT} pulsweise getaktet wird. Die Referenzspannung U_{REF} wird von einer Spannungsquelle 110 abgegeben, die einen mittels eines Steuersignals u_{PWM} gesteuerten Schalter S1 aufweist, welcher einen Kondensator C1 über einen Widerstand R1 entsprechend dem Taktverhältnis des Steuersignals u_{PWM} lädt und entlädt, das am ersten Ausgang 411 eines Prozessors 4 abgegeben wird. Durch Änderung des Taktverhältnisses bzw. durch eine Pulsbreitenmodulation des Steuersignals u_{PWM} wird der Kondensator C1 jeweils auf die erforderliche Steuerspannung U_{ST} geladen. Durch das Steuersignal u_{PT}, das an einem zweiten Ausgang 412 des Prozessors 4 abgegeben wird, wird die Stromquelle 111 periodisch oder aperiodisch in Intervallen vorzugsweise im Bereich von 5 ms bis 15 ms und mit Pulsbreiten von 5 µs bis 15 µs (vorzugsweise mit einer Periodendauer von etwa 10 ms und einer Pulsdauer von 8-10 µs) geschaltet. In einem entsprechenden Takt, zeitlich leicht verzögert, sind die Ausgänge der in Figur 6 gezeigten Komparatoren CMP1, CMP2 und CMP3 (nicht gezeigt sind die für das zweite Referenzelement D3' vorgesehenen Komparatoren CMP2' und CMP3'), die über Eingänge 421 bzw. 422, 423 bzw. 424, 425 mit dem Prozessor 4 verbunden sind und denen die Ausgangssignale des Sensorelements D2 bzw. des Referenzelements D3 bzw. D3' zugeführt werden, vom Prozessor 4 einzulesen bzw. abzutasten. Durch die in Figur 6 gezeigten Komparatormodule 200, 300 und 300' (300' nur schematisch dargestellt) erfolgt daher eine Analog-/Digital-Wandlung der Eingangssignale und durch das Sendermodul 100 eine Digital-/Analog-Wandlung des an Ausgang 411 abgegebenen Signals.

In Figur 6 ist der Neigungssensor 1 mit dem in das Sendermodul 100 eingebundenen Strahlungselement D1, mit dem in das erste Komparatormodul 200 eingebundenen Sensorelement D2 und dem in das zweite Komparatormodul 300 eingebundnen Referenzelement D3 schematisch dargestellt.

Das Ausgangssignal des Sensorelements D2 wird über die als Hochpass dienende R-C Kombination mit den Widerständen R2, R3 und dem Kondensator C2 dem invertierenden Eingang des ersten Komparators CMP1 zugeführt, dessen nicht-invertierender Eingang mit einem durch die Widerstände R4 und R5 gebildeten Spannungsteiler verbunden ist, welcher die einen ersten Schwellwert darstellende Spannung U_{E11} liefert. Der Ausgang des ersten Komparators CMP1, der logisch "0" anzeigt, wenn der erste Schwellwert überschritten wurde, ist mit dem Eingang 421 des Prozessors 4 verbunden.

Das Ausgangssignal des Referenzelements D3 wird über die als Hochpass dienende R-C Kombination mit den Widerständen R6, R7 und dem Kondensator C3 den invertierenden Eingängen des zweiten und des dritten Komparators CMP2 bzw. CMP3 zugeführt, die einen Fensterkomparator bilden (siehe [4], Seiten 611-612). Die nicht-invertierenden Eingänge der Komparatoren CMP2, CMP3 sind mit einem variablen Spannungsteiler verbunden, der durch die Widerstände R8, R9, R11, R12, R13 und den steuerbaren Widerstand R10 derart gebildet ist, dass am nicht-invertierenden Eingang des zweiten Komparators CMP2 die einen zweiten, unteren Schwellwert darstellende Spannung u_{E21} und am nicht-invertierenden Eingang des dritten Komparators CMP3 die einen dritten, oberen Schwellwert darstellende Spannung u_{E31} anliegt. Die Ausgänge des zweiten und des dritten Komparators CMP2 und CMP3, die anzeigen, ob der zweite und gegebenenfalls auch der dritte Schwellwert überschritten wurde, sind mit den Eingängen 422 bzw. 423 des Prozessors 4 verbunden.

Sofern der obere dritte Schwellwert überschritten wurde, ist daher auch der untere zweite Schwellwert überschritten worden, so dass in diesem Fall das Ausgangssignal u_{OUT2} des zweiten Komparators ebenfalls logisch "0" anzeigen sollte. Sofern dies nicht der Fall ist, wird dies bei der Verarbeitung der vom Prozessor 4 eingelesenen Signale vorzugsweise als Fehler detektiert (siehe nachstehende Tabelle).

Figur 7 zeigt den Verlauf des Stromes i_{D1} im Strahlungselement D1 während der Abgabe eines Strahlungspulses sowie den entsprechenden Verlauf der Eingangssignale u_{E11}, u_{E12} am ersten Komparator CMP1 bei der in Figur 4 gezeigten Ausrichtung des Neigungssensors 1. Nach dem Anstieg des Stromes i_{D1} zum Zeitpunkt T_{A} steigt die Spannung u_{E12} an, überschreitet die den ersten Schwellwert darstellende Spannung u_{E11} jedoch nicht, so dass auch das Ausgangssignal u_{OUT1} des Komparators CMP1 unverändert bleibt. Zum Zeitpunkt T_{B} wird daher der Wert logisch "1" am Ausgang des ersten Komparators CMP1 abgetastet.

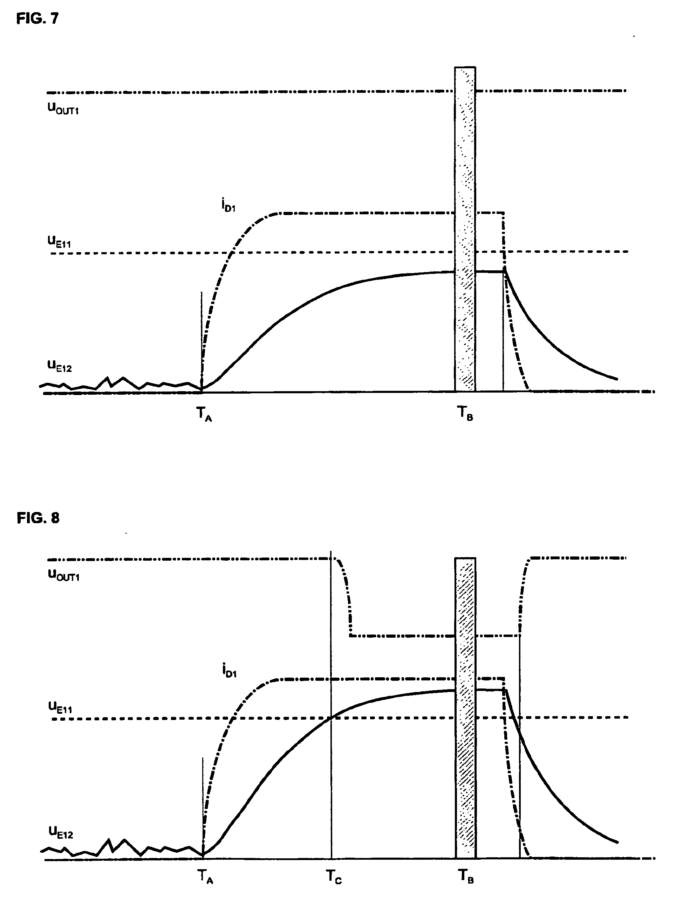

Figur 8 zeigt den Verlauf des Stromes i_{D1} im Strahlungselement D1 während der Abgabe eines Strahlungspulses sowie den entsprechenden Verlauf der Eingangssignale u_{E11}, u_{E12} am ersten Komparator CMP1 bei der in Figur 5 gezeigten Ausrichtung des Neigungssensors 1. Hier überschreitet die Spannung u_{E12} am invertierenden Eingang des ersten Komparators CMP1 zum Zeitpunkt T_{C} die den ersten Schwellwert darstellende Spannung u_{E11}, so dass zum Zeitpunkt T_{B} der Wert logisch "0" am Ausgang des ersten Komparators CMP1 abgetastet wird.

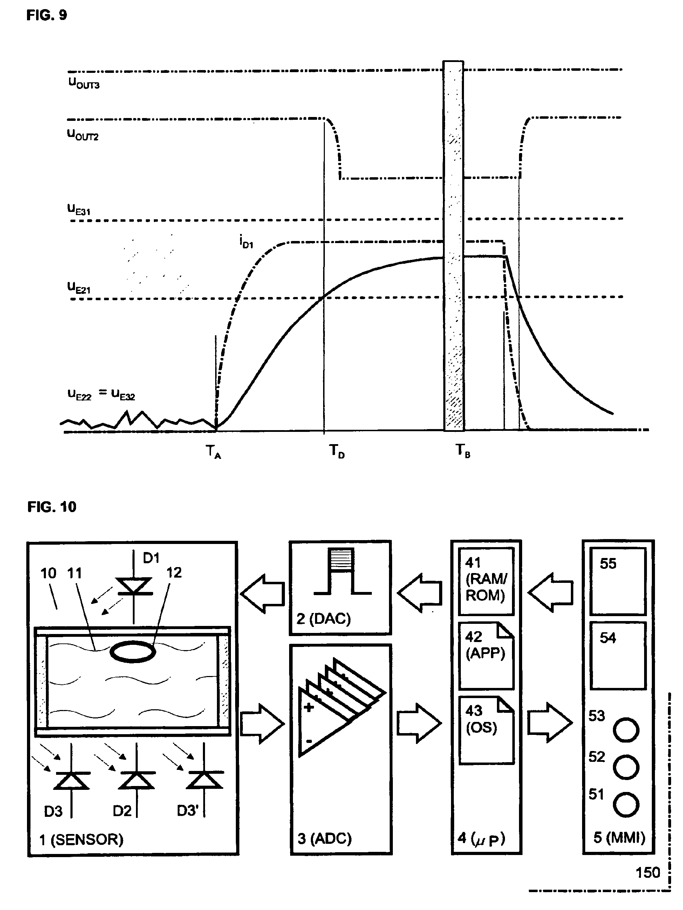

Figur 9 zeigt einen typischen Verlauf der Eingangssignale u_{E21}, u_{E22} bzw. u_{E31}, u_{E32} am zweiten und dritten Komparator CMP2, CMP3. Hier überschreitet die Spannung u_{E22} bzw. u_{E32} (u_{E22} = u_{E32}) an den invertierenden Eingängen der Komparatoren CMP2, CMP3 zum Zeitpunkt T_{D} die den zweiten, unteren Schwellwert darstellende Spannung u_{E21}, so dass zum Zeitpunkt T_{B} am Ausgang des zweiten Komparators CMP2 der Wert logisch "0" abgetastet wird. Die den dritten, oberen Schwellwert darstellende Spannung u_{E31} wird jedoch nicht überschritten, so dass zum Zeitpunkt T_{B} am Ausgang des dritten Komparators CMP3 der Wert logisch "1" abgetastet wird, wodurch angezeigt wird, dass die Strahlungsintensität im vorgesehenen Bereich liegt.

Figur 10 zeigt in einem Blockschaltbild die erfindungsgemässe Überwachungsvorrichtung 150 mit dem Neigungssensor 1, einer Komparatorbaugruppe 3 enthaltend die Komparatormodule 200; 300, 300',..., einem der Steuerung des Strahlungselements D1 dienenden D/A-Wandler 2, und einer mit dem Prozessor 4 verbundenen Ein-/Ausgabeeinheit 5 (Man Machine Interface MMI), auf dem Signalisierungselemente 51, 52, 53, beispielsweise Leuchtdioden, eine Anzeigeeinheit 54, beispielsweise eine Flüssigkristallanzeige, und eine Eingabeeinheit 55, beispielsweise eine Tastatur oder eine berührungsempfindliche Anzeigeeinheit angeordnet sind. Der Prozessor 4, der mit einem in einer Speichereinheit 41 vorgesehenen Betriebsprogramm 43 versehen ist, kann beispielsweise der Haupt-Prozessor der Waage 1000 oder ein gesonderter Prozessor sein, mittels dessen eine Applikation bzw. Anwendung 42 implementiert wird, die der Auswertung der Komparatorsignale U_{OUT1}, U_{OUT2}, und U_{OUT3}, der Steuerung des Strahlungselements D1, der Signalisierung des Zustandes der Waage 1000 und gegebenenfalls der davon abhängigen Steuerung von Mess- oder Produktionsprozessen dient.

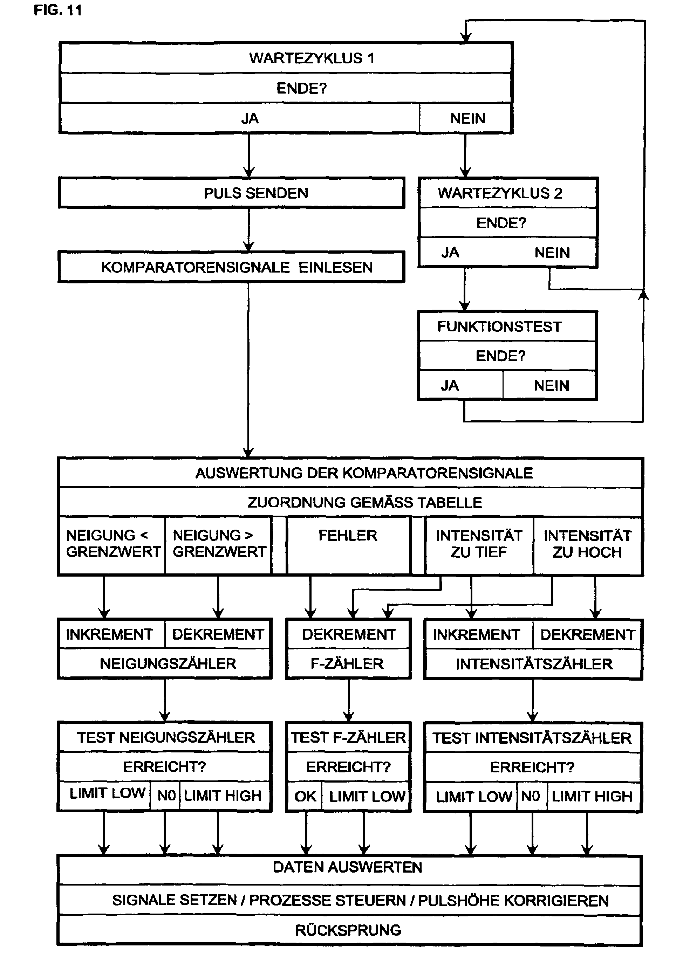

Figur 11 zeigt ein erstes Diagramm, in dem die gemäss der Anwendung 42 auszuführenden Arbeitsschritte aufgezeichnet sind. Nach Ablauf eines ersten Wartezyklus, wird zum Zeitpunkt T_{A} ein Puls gesandt, wonach zum Zeitpunkt T_{B} die digitalen Werte der Komparatorsignale u_{OUT1}, u_{OUT2}, und u_{OUT3} eingelesen werden (für das mit dem zweiten Referenzelement D3' verbundene Komparatormodul 300' werden die nicht dargestellten Komparatorsignale u_{OUT2}, und u_{OUT3}, eingelesen). Anschliessend wird ein den eingelesenen Werten der Komparatorsignale u_{OUT1}, u_{OUT2}, u_{OUT3}, u_{OUT2}, und u_{OUT3}, entsprechender Wert aus einer Tabelle ausgelesen, welcher den Zustand der Waage 1000 und der Überwachungsvorrichtung 150 beschreibt.

Nachstehend ist diese Tabelle mit einigen typischen Kombinationen der Komparatorsignale u_{OUT1}, u_{OUT2}, u_{OUT3}, u_{OUT2}, und u_{OUT3}, auszugsweise gezeigt (der Wert logisch "0" bedeutet, dass die vom zugehörigen Komparator CMP1, ... überwachte Schwelle überschritten wurde):

**Tabelle**

| | | REFERENZ 1 | | REFERENZ 2 | | |
|---|---|---|---|---|---|---|
| | CMP1 u_{OUT1} | CMP2 u_{OUT2} | CMP3 u_{OUT3} | CMP2' u_{OUT2'} | CMP3' u_{OUT3'} | Status |
| 1 | 0 | 0 | 0 | 0 | 0 | Intensität zu hoch |
| 2 | 0 | 0 | 1 | 0 | 0 | Intensität zu hoch |
| 3 | 1 | 1 | 1 | 1 | 1 | Intensität zu tief |
| 4 | 0 | 1 | 0 | 0 | 1 | Fehler |
| 5 | 0 | 0 | 1 | 1 | 0 | Fehler |
| 6 | 0 | 0 | 1 | 1 | 1 | Neigungsfehler |
| 7 | 1 | 0 | 1 | 0 | 1 | kein Neigungsfehler |
| ... | ... | ... | ... | ... | ... | ... |
| 32 | | | | | | |

In den Fällen 1 und 2 wurde bei einem der Fensterkomparatoren bzw. bei den Komparatoren CMP3 und/oder CMP3' der obere Schwellwert überschritten, weshalb eine zu hohe Intensität der Strahlung registriert wird.

In Fall 3 wurde keiner der Schwellwerte überschritten, so dass eine zu tiefe Intensität der Strahlung registriert wird.

In den Fällen 4 und 5 wird angezeigt, dass einer der oberen dritten Schwellwerte überschritten wurde, ohne, dass durch Überschreiten des zugehörigen unteren zweiten Schwellwerts der zugehörige Komparator CMP2 bzw. CMP2' geschaltet hat. Bei diesen Fällen liegt ein Fehler in den Komparatormodulen 200, 300 bzw. 300' vor.

In Fall 6 hat der erste Komparator CMP1 geschaltet, wobei einer der Fensterkomparatoren bzw. die Komparatoren CMP2 und CMP3 anzeigen, dass die Strahlungsintensität im vorgegebenen Bereich liegt. In diesem Fall liegt ein Neigungsfehler vor.

In Fall 7 hat der erste Komparator CMP1 nicht geschaltet, weil die Blase 12 immer noch konzentrisch zur Sensorachse sx liegt. Es liegt daher kein Neigungsfehler vor.

Damit bei der einmaligen Detektion von Funktions-, Neigungsfehlern, oder unzulässigen Intensitätswerten keine falschen Alarme ausgelöst werden, werden anhand der Auswertungsergebnisse einzelne Zähler, ein Neigungszähler, ein Fehlerzähler und ein Intensitätszähler, inkrementiert oder dekrementiert. Bei einer zu hohen oder zu tiefen Intensität wird der Intensitätszahler inkrementiert oder dekrementiert und der Fehlerzähler dekrementiert. Erst bei Erreichen eines Grenzwerts werden Signale, beispielsweise durch Schalten der Leuchtdioden 51, 52 oder 53 angezeigt (NEIGUNG INNERHALB DER TOLERANZ - NEIGUNG AUSSERHALB DER TOLERANZ - SYSTEMFEHLER). Sofern ein Grenzwert erreicht wurde, der anzeigt, dass die Intensität der Strahlung ausserhalb des vorgesehenen Bereichs liegt, wird durch eine Änderung der Zufuhr der elektrischen Leistung an das Strahlungselement D1, bzw. durch eine Änderung des Diodenstromes i_{D1} die Strahlungsintensität entsprechend verändert.

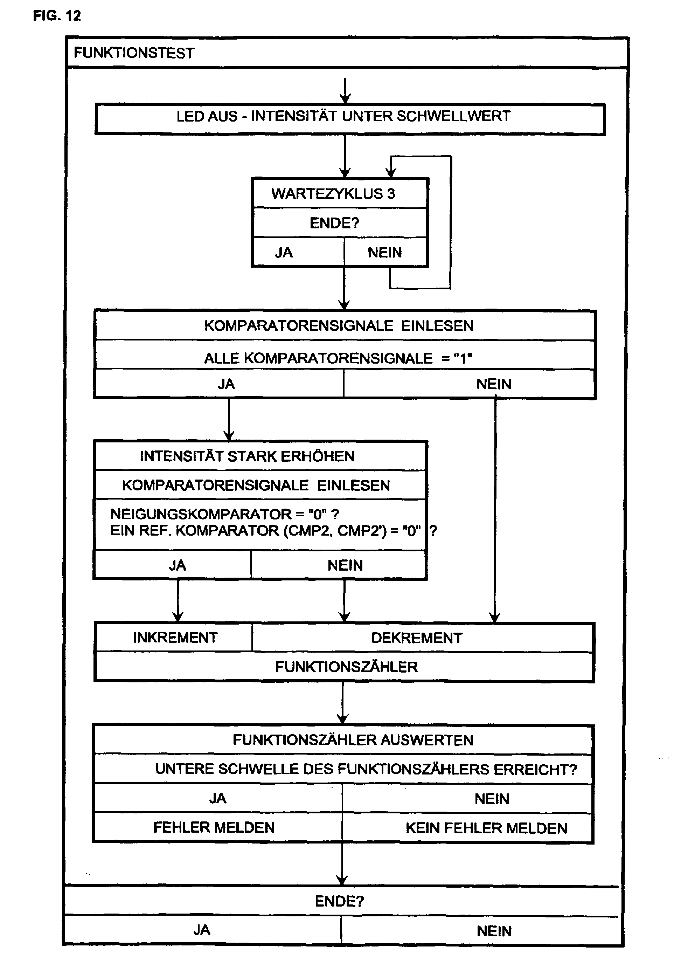

Sofern der erste Wartezyklus noch nicht abgelaufen ist wird zyklisch geprüft, ob ein zweiter Wartezyklus abgelaufen ist. Sofern dies der Fall ist, wird der in Figur 12 in einem Diagramm dargestellte Funktionstest durchgeführt, mittels dessen die korrekte Funktion der Module und Bauelemente geprüft wird.

Bei der Durchführung des Funktionstests wird die Intensität der Strahlung in einem ersten Schritt auf Null gesetzt (i_{D1} = 0) oder nur in einen Bereich erhöht, in dem die Komparatoren CMP1, ... noch nicht schalten dürfen. Das Schalten eines Komparators CMP1, ... wird daher als Fehler detektiert, wonach ein Funktionszähler dekrementiert wird. In einem zweiten Schritt wird die Intensität der Strahlung in einen Bereich erhöht, in dem zumindest der erste Komparator CMP1 (Neigungskomparator) und die Komparatoren CMP2, CMP3 oder CMP2', CMP3' eines Fensterkomparators schalten sollen. Sofern diese Komparatoren CMP1 und CMP2, CMP3 oder CMP2', CMP3' nicht schalten, wird ein Fehler detektiert und der Funktionszähler dekrementiert. Ansonsten wird der Funktionszähler inkrementiert. Anschliessend wird der Funktionszähler ausgewertet und ein Funktionsfehler angezeigt, falls der entsprechende Grenzwert erreicht wurde.

Das erfindungsgemässe Verfahren, die Überwachungsvorrichtung 150 und die Waage 1000 wurden in vorzugsweisen Ausgestaltungen beschrieben. Anhand der erfindungsgemässen Lehre sind jedoch weitere Ausgestaltungen realisierbar. Insbesondere kann der erfindungsgemässe Neigungssensor 1 auch mit anders aufgebauten Komparatorschaltungen und Auswerteprogrammen eingesetzt werden. Besonders vorteilhaft ist die beschriebene Auswertung der Komparatorsignale anhand der Softwareanwendung 42. Diese Anwendung kann, ausgehend von der erfindungsgemässen Lehre, jedoch in fachmännischer Weise den gegebenen Bedürfnissen angepasst werden.

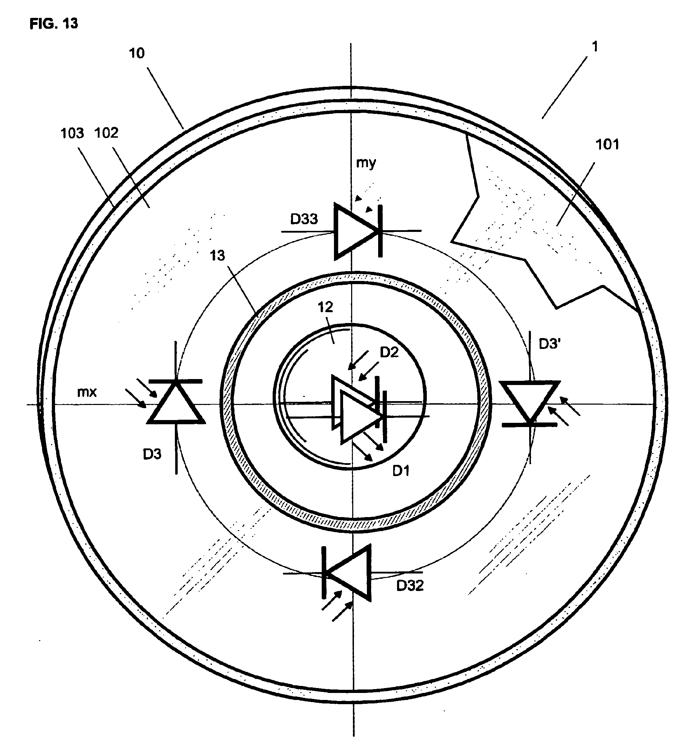

Entsprechend den vorliegenden Anforderungen sind ferner verschiedene weitere Ausgestaltungen des Neigungssensors bzw. der Libelle realisierbar. Figur 13 zeigt einen erfindungsgemässen Neigungssensor 1 von oben, jedoch ein wenig nach rechts unten geneigt. Die Blase 12 liegt immer noch im Strahlengang zwischen dem Strahlungselement D1 und dem Sensorelement D2, hat sich an einen Kontrollring 13 angenähert, anhand dessen von Auge festgestellt werden kann, ob die Neigung noch im zulässigen Bereich liegt, wie gross die Neigung innerhalb oder ausserhalb des zulässigen Bereichs ist und in welche Richtung die Neigung verläuft. Wie bereits oben erwähnt, ist die Ergänzung der elektronischen Überwachung durch die visuelle Überwachung durch den Anwender besonders vorteilhaft. Durch den Einsatz wenigstens eines oder zweier oder weiterer Referenzelemente D32, D33 kann die Neigungsrichtung und das Neigungsmass jedoch auch elektronisch ermittelt werden. Dabei werden die Referenzelemente D3 und D3' auf einer ersten Messachse mx und die beiden weiteren Referenzelemente D32, D33 vorzugsweise auf einer dazu orthogonalen zweiten Messachse my angeordnet. Solange die Blase 12 entlang der zweiten Messachse my wandert, liegt der in der Tabelle angegebene Fall sieben vor, wobei der erste Komparator CMP1 gegebenenfalls umschaltet. In welche Richtung entlang der zweiten Messachse my die Blase 12 wandert kann nun anhand der weiteren Referenzelementen D32, D33 und zugehörigen Komparatoren ermittelt werden. Falls beispielsweise der mit Referenzelement D32 verbundene Komparator schaltet, ist die Blase 12 zwischen das Strahlungselement D1 und das Referenzelement D32 gewandert.

Der erfindungsgemässe Neigungssensor 1 und die Überwachungsvorrichtung 150 sind besonders vorteilhaft in einer Waage 1000 einsetzbar. Selbstverständlich können der Neigungssensor 1 und die Überwachungsvorrichtung 150 jedoch auch in beliebigen anderen Messvorrichtungen eingesetzt werden.

### Literaturverzeichnis

[1] Offenlegungsschrift DE 32 34 372 A1
[2] Offenlegungsschrift JP-61-108927-A2
[3] Offenlegungsschrift DE 38 00 155 A1
[4] U. Tietze, Ch. Schenk, Halbleiterschaltungstechnik, 11.
   Auflage, 1. Nachdruck, Springer Verlag, Berlin 1999
[5] Offenlegungsschrift JP-58-033114-A
[6] Patentschrift DE 43 16 046 C1
[7] Offenlegungsschrift DE 199 31 679 A1

### Bezugszeichenliste

- 1: Neigungssensor
- 10: Behälter
- 11: Flüssigkeit
- 12: Blase
- 13: Kontrollring
- 100: Sendermodul
- 110: Spannungsquelle
- 111: Stromquelle
- 150: Überwachungsvorrichtung
- 1000: Waage
- 1001: Waagengehäuse
- 1002: justierbare Füsse
- 1003: Eingabeeinheit
- 2: Digital-/Analog Wandler
- 200: erstes Komparatormodul
- 3: Analog-/Digital Wandler / Komparatorbaugruppe
- 300, 300': zweites Komparatormodul
- 4: Prozessor
- 41: Speichereinheit
- 411, 412: Ausgänge
- 412-425: Eingänge
- 430: Bus / Systembus
- 42: Anwendung
- 43: Betriebssystem
- 5: Ein- / Ausgabeeinheit
- 51,..., 53: Leuchtdioden
- 54: Anzeigeeinheit, Flüssigkristallanzeige
- 55: Tastatur, berührungsempfindliche Anzeige
- C1, C2: Kondensatoren
- CMP1, ...: Komparatoren, Operationsverstärker
- D1: Strahlungselement (Leuchtdiode)
- D2: Sensorelement (Photodiode)
- D3, D3': Referenzelemente (Photodioden)
- D32, D33: weitere Referenzelemente (Photodioden)
- R1, ..., R13: Widerstände
- S1: Schalter
- T1: Schalttransistor

## Patentansprüche

1. Verfahren zur Überwachung der Ausrichtung einer Messvorrichtung, insbesondere einer Waage (1000), mittels einer Überwachungsvorrichtung (150) mit einem nach dem Prinzip einer Libelle arbeitenden Neigungssensor (1), der einen Behälter (10) aufweist, der unter Bildung einer Blase (12) mit einer Flüssigkeit (11) gefüllt ist, wobei die Position der Blase (12) optisch mittels eines auf einer ersten Seite der Blase (12) angeordneten, der Abgabe einer Strahlung dienenden Strahlungselements (D1) und eines auf der dazu gegenüberliegenden zweiten Seite der Blase (12) angeordneten, dem Empfang der Strahlung dienenden Sensorelement (D2), das zusammen mit dem Strahlungselement (D1) die Sensorachse (sx) bildet, gemessen wird, wobei auf der zweiten Seite, beidseits des Sensorelements (D2), wenigstens je ein dem Empfang der Strahlung dienendes Referenzelement (D3; D3') vorgesehen ist, mit denen geprüft wird, ob die Intensität der Strahlung in einem zulässigen Bereich liegt, **dadurch gekennzeichnet, dass** zur Kontrolle der Überwachungsvorrichtung (150) selbsttätig innerhalb der Überwachungsvorrichtung (150) ein Funktionstest durchgeführt wird.

2. Verfahren nach Anspruch 1, **dadurch gekennzeichnet, dass** das Strahlungselement (D1) eine Strahlung im Infrarotbereich abgibt und/oder dass das Sensorelement (D2) und die beiden Referenzelemente (D3; D3'), die vorzugsweise auf einer durch das Sensorelement (D2) führenden Geraden angeordnet sind, selektiv für den Empfang der Strahlung im Infrarotbereich ausgelegt sind und/oder, dass die beiden Referenzelemente (D3; D3') derart angeordnet sind, dass die empfangene Strahlung nicht durch die Blase (12) hindurch tritt, falls diese konzentrisch zur Sensorachse (sx) liegt.

3. Verfahren nach Anspruch 1 oder 2, **dadurch gekennzeichnet, dass** das Ausgangssignal des Sensorelements (D2) mittels eines ersten Komparators (CMP1) mit einem ersten Schwellwert (u_{E11}) verglichen wird, der ein Mass für den im Bereich einer zulässigen Neigung liegenden Abstand der Blase (12) von der Sensorachse (sx) ist, und dass die Ausgangssignale der beiden Referenzelemente (D3; D3') mittels je eines zweiten und dritten Komparators (CMP2, CMP3; CMP2', CMP3') mit einem unteren zweiten Schwellwert (u_{E21}) und einem oberen dritten Schwellwert (u_{E31}) verglichen werden, wobei die beiden Schwellwerte (U_{E21} und u_{E31}) den Bereich der zulässigen Intensität der Strahlung und somit den Bereich der dem Strahlungselement (D1), vorzugsweise einer Leuchtdiode, zuzuführenden elektrischen Leistung bestimmen.

4. Verfahren nach Anspruch 1, 2 oder 3, **dadurch gekennzeichnet, dass** die Strahlung periodisch oder aperiodisch in Pulsen, vorzugsweise in Intervallen im Bereich von 5 ms bis 15 ms und mit Pulsbreiten von 5 µs bis 15 µs, abgeben wird und/oder dass die dem Strahlungselement (D1) zuzuführende elektrische Leistung durch Änderung der Höhe der Pulse bestimmt wird.

5. Verfahren nach Anspruch 3 oder 4, **dadurch gekennzeichnet, dass** zur Kontrolle der Überwachungsvorrichtung
a) mittels einer Testsequenz die Intensität der Strahlung auf einen Wert erhöht wird, der unterhalb des zweiten Schwellwerts (u_{E21}) liegende Ausgangssignale der Sensor- und Referenzelemente (D2, D3, D3') auslösen sollte, wonach die Ausgangssignale (u_{OUT1}, u_{OUT2}, u_{OUT3}) der dem ersten, zweiten und dritten Schwellwert zugehörigen Komparatoren (CMP1; CMP2, CMP; CMP2', CMP3') geprüft werden und bei Überschreiten eines Schwellwerts (u_{E11}, u_{E21}, u_{E31}) ein Fehler registriert wird, und/oder, dass
b) mittels der Testsequenz die Intensität der Strahlung auf einen Wert erhöht wird, der oberhalb des ersten und dritten Schwellwerts (u_{E11}, u_{E31}) liegende Ausgangssignale der Sensor- und Referenzelemente (D2, D3, D3') auslösen sollte, wonach die Ausgangssignale (u_{OUT1}, u_{OUT2}, u_{OUT3}) der dem ersten, zweiten und dritten Schwellwert zugehörigen Komparatoren (CMP1; CMP2, CMP3; CMP2', CMP3') geprüft werden und bei Unterschreiten eines Schwellwerts (u_{E11}, U_{E21}, u_{E31}) ein Fehler registriert wird, und/oder, dass
c) während der Neigungsmessung ein Fehler registriert wird, falls das Ausgangssignal (U_{OUT2}) des dem tiefer liegenden zweiten Schwellwert (U_{E21}) zugehörigen Komparators (CMP2; CMP2') ein Unterschreiten des zweiten Schwellwerts (u_{E21}) und das Ausgangssignal (u_{OUT3}) des dem höher liegenden dritten Schwellwert (u_{E31}) zugehörigen Komparators (CMP3; CMP3') ein Überschreiten des dritten Schwellwerts (u_{E31}) anzeigt, und/oder, dass
d) während der Neigungsmessung eine zu hohe Intensität der Strahlung registriert wird, falls das Ausgangssignal (u_{OUT3}) des dem höher liegenden dritten Schwellwert (u_{E31}) zugehörigen Komparators (CMP3; CMP3') ein Überschreiten des dritten Schwellwerts (u_{E31}) anzeigt, und/oder, dass
e) während der Neigungsmessung eine zu tiefe Intensität der Strahlung registriert wird, falls die Ausgangssignale (u_{OUT1}, u_{OUT2}, u_{OUT3}) aller Komparatoren (CMP1; CMP2, CMP3; CMP2', CMP3') ein Unterschreiten der zugehörigen Schwellwerte (u_{E11}, u_{E21}, u_{E31}) anzeigen.

6. Verfahren nach Anspruch 4 oder 5, **dadurch gekennzeichnet, dass** die Ausgangssignale (u_{OUT1}, u_{OUT2}, u_{OUT3}) aller Komparatoren (CMP1; CMP2, CMP3; CMP2', CMP3') in einem Prozessor (4) verarbeitet werden, wobei
a) nach jedem Unter- oder Überschreiten des einen Neigungsfehler anzeigenden ersten Schwellwerts (u_{E11}) ein Neigungszähler hin zu einem ersten bzw. zweiten Grenzwert verändert wird, und/oder
b) nach jedem Unterschreiten des eine zu tiefe Intensität der Strahlung anzeigenden zweiten Schwellwerts (U_{E21}) ein Intensitätszähler von einem dritten zu einem vierten Grenzwert verändert wird, und/oder
c) nach jedem Überschreiten des eine zu hohe Intensität anzeigenden dritten Schwellwerts (U_{E31}) der Intensitätszähler vom vierten gegen den dritten Grenzwert verändert wird, und/oder
d) nach Registrierung eines Fehlers während der Testsequenz ein Funktionszähler hin zu einem fünften Grenzwert verändert wird, und/oder
e) nach Registrierung eines Fehlers während der Neigungsmessung der Funktionszähler hin zum fünften oder ein Fehlerzähler hin zu einem sechsten Grenzwert verändert wird.

7. Verfahren nach Anspruch 6, **dadurch gekennzeichnet, dass**
a) nach Erreichen des ersten oder zweiten Grenzwerts eine innerhalb oder ausserhalb des Toleranzbereichs liegende Neigung signalisiert und ein Messprozess gegebenenfalls angehalten wird, und/oder, dass
b) nach Erreichen des dritten oder vierten Grenzwerts die Intensität der Strahlung bzw. die dem Strahlungselement (D1) zugeführte elektrische Leistung entsprechend verändert wird, und/oder, dass
c) nach Erreichen des fünften oder sechsten Grenzwerts ein entsprechender Fehler signalisiert und der Messprozess gegebenenfalls angehalten wird.

8. Überwachungsvorrichtung (150) zur Durchführung des Verfahrens nach einem der Ansprüche 1 bis 7 mit einem nach dem Prinzip einer Libelle arbeitenden Neigungssensor (1), der einen Behälter (10) aufweist, der unter Bildung einer Blase (12) mit einer Flüssigkeit (11) gefüllt ist, wobei die Position der Blase (12) optisch mittels eines auf einer ersten Seite der Blase (12) angeordneten, der Abgabe einer Strahlung dienenden Strahlungselements (D1) und eines auf der dazu gegenüberliegenden zweiten Seite der Blase (12) angeordneten, dem Empfang der Strahlung dienenden Sensorelements (D2), das zusammen mit dem Strahlungselement (D1) die Sensorachse (sx) bildet messbar ist, wobei auf der zweiten Seite beidseits des Sensorelements (D2) wenigstens je ein dem Empfang der Strahlung dienendes Referenzelement (D3; D3') angeordnet ist, mittels denen prüfbar ist, ob die Intensität der Strahlung in einem zulässigen Bereich liegt, **dadurch gekennzeichnet, dass** innerhalb der Überwachungsvorrichtung (150) Mittel zum selbsttätigen Durchführen eines Funktionstests der Überwachungsvorrichtung (150) vorhanden sind.

9. Überwachungsvorrichtung (150) nach Anspruch 8, **dadurch gekennzeichnet, dass** das Strahlungselement (D1) zur Abgabe einer Strahlung im Infrarotbereich vorgesehen ist und/oder dass das Sensorelement (D2) und die beiden Referenzelemente (D3; D3'), die vorzugsweise auf einer durch das Sensorelement (D2) führenden Geraden angeordnetsind, selektiv für den Empfang der Strahlung im Infrarotbereich ausgelegt sind und/oder, dass die beiden Referenzelemente (D3; D3') derart angeordnet sind, dass die empfangene Strahlung nicht durch die Blase (12) hindurch tritt, falls diese im wesentlichen konzentrisch zur Sensorachse (sx) liegt.

10. Überwachungsvorrichtung (150) nach Anspruch 8 oder 9, **dadurch gekennzeichnet, dass** das Ausgangssignal des Sensorelements (D2) mittels eines ersten Komparators (CMP1) mit einem ersten Schwellwert (u_{E11}) vergleichbar ist, der ein Mass für den im Bereich einer zulässigen Neigung liegenden Abstand der Blase (12) von der Sensorachse (sx) ist, und dass die Ausgangssignale der beiden Referenzelemente (D3; D3') mittels je eines zweiten und dritten Komparators (CMP2, CMP3; CMP2', CMP3') je mit einem unteren zweiten Schwellwert (u_{E21}) und einem oberen dritten Schwellwert (u_{E31}) vergleichbar sind, wobei die beiden Schwellwerte (u_{E21} und u_{E31}) den Bereich der zulässigen Intensität der Strahlung und somit den Bereich der dem Strahlungselement (D1), vorzugsweise einer Leuchtdiode, zuzuführenden elektrischen Leistung bestimmen.

11. Überwachungsvorrichtung (150) nach Anspruch 10, **dadurch gekennzeichnet, dass** die Ausgangssignale (u_{OUT1}, U_{OUT2}, u_{OUT3}) aller Komparatoren (CMP1; CMP2, CMP3; CMP2', CMP3') einem Prozessor (4) zuführbar sind, mittels dessen
a) nach jedem Unter- oder Überschreiten des einen Neigungsfehler anzeigenden ersten Schwellwerts (u_{E11}) ein Neigungszähler hin zu einem ersten bzw. zweiten Grenzwert veränderbar ist, und/oder
b) nach jedem Unterschreiten des eine zu tiefe Intensität der Strahlung anzeigenden zweiten Schwellwerts (u_{E21}) ein Intensitätszähler von einem dritten zu einem vierten Grenzwert veränderbar ist, und/oder
c) nach jedem Überschreiten des eine zu hohe Intensität anzeigenden dritten Schwellwerts (u_{E31}) der Intensitätszähler vom vierten gegen den dritten Grenzwert veränderbar ist, und/oder
d) nach Registrierung eines Fehlers während der Testsequenz ein Funktionszähler hin zu einem fünften Grenzwert veränderbar ist, und/oder
e) nach Registrierung eines Fehlers während der Neigungsmessung der Funktionszähler hin zum fünften oder ein Fehlerzähler hin zu einem sechsten Grenzwert veränderbar ist.

12. Überwachungsvorrichtung (150) nach Anspruch 11, **dadurch gekennzeichnet, dass**
a) nach Erreichen des ersten oder zweiten Grenzwerts eine innerhalb oder ausserhalb des Toleranzbereichs liegende Neigung mittels Anzeigeelementen (51, 52) und/oder einer Anzeigeeinheit (54) signalisierbar und der Messprozess gegebenenfalls anhaltbar ist; und/oder, dass
b) nach Erreichen des dritten oder vierten Grenzwerts die Intensität der Strahlung bzw. die dem Strahlungselement (D1) zugeführte elektrische Leistung entsprechend veränderbar ist; und/oder, dass
c) nach Erreichen des fünften oder sechsten Grenzwerts ein entsprechender Fehler mittels der Anzeigeelemente (51, 52) und/oder der Anzeigeeinheit (54) signalisierbar und der Messprozess gegebenenfalls anhaltbar ist.

13. Überwachungsvorrichtung (150) nach einem der Ansprüche 8 bis 12, **dadurch gekennzeichnet, dass** die Position der Blase (12) im Neigungssensor (1) zusätzlich von Auge kontrollierbar ist.

14. Messvorrichtung, insbesondere Waage (1000), mit einer Überwachungsvorrichtung (150) nach einem der Ansprüche 8 bis 13.

15. Messvorrichtung nach Anspruch 14, **dadurch gekennzeichnet, dass** der an die Überwachungsvorrichtung (150) angeschlossene Neigungssensor (1) derart am Gehäuse (1001) der Messvorrichtung montiert ist, dass die Abweichung der Blase von der Sensorachse (sx) sichtbar ist.

## Claims

1. Method of monitoring the alignment of a measuring instrument, specifically a balance (1000), by means of a monitoring device (150) that is equipped with an inclination sensor (1) functioning according to the principle of a spirit level, said inclination sensor comprising a container (10) filled with a fluid (11) in which a bubble (12) is formed, wherein the position of the bubble (12) is measured optically by means of a radiating element (D1) that is arranged on a first side of the bubble (12) and serves to emit a radiation, and by means of a sensor element (D2) that is arranged on the second side, being opposite the first side, of the bubble (12) and serves to receive said radiation, wherein the radiating element (D1) and the sensor element (D2) together define the sensor axis (sx), wherein the sensor element (D2) on said second side is flanked by at least two reference elements (D3; D3') in respectively opposite positions from the sensor element, and wherein said reference elements serve to test whether the intensity of the radiation is within a permissible range, **characterized in that** a function test is performed automatically inside the monitoring device (150) in order to verify that the monitoring device (150) is functioning correctly.

2. Method according to claim 1, **characterized in that** the radiating element (D1) emits a radiation in the infrared range and/or that the sensor element (D2) as well as the two reference elements (D3; D3') which are aligned in a straight line with the sensor element (D2) are designed to be selectively receptive to radiation in the infrared range and/or that the two reference elements (D3; D3') are arranged in such a way that the radiation received does not cross the bubble (12) when the latter is centered on the sensor axis (sx).

3. Method according to claim 1 or 2, **characterized in that** by means of a first comparator (CMP1) the output signal of the sensor element (D2) is compared to a first threshold value (u_{E11}) which represents a measure for determining whether the distance of the bubble (12) from the sensor axis (sx) is within the range corresponding to a permissible inclination, and that by means of second and third comparators (CMP2, CMP3; CMP2', CMP3') the output signals of the respectively associated reference elements (D3; D3') can each be compared to a lower, second threshold value (u_{E21}) and an upper, third threshold value (u_{E31}), wherein the two threshold values (u_{E21}, u_{E31}) define the permissible range of intensity of the radiation and thus the range of electrical power that needs to be supplied to the radiating element (D1) which is preferably a light-emitting diode.

4. Method according to claim 1, 2 or 3, **characterized in that** the radiation is emitted periodically or aperiodically in pulses that follow each other preferably in intervals of 5 ms to 15 ms and have pulse widths from 5 µs to 15 µs, and/or that the electrical power that is to be supplied to the radiating element (D1) is determined by a change in the pulse height.

5. Method according to claim 3 or 4, **characterized in that** the monitoring device is subject to a control, wherein
a) by means of a test sequence, the intensity of the radiation is increased to a level designed to generate output signals of the sensor- and reference elements (D2, D3, D3') that lie below the second threshold value (u_{E21}), whereupon the output signals (u_{OUT1}, u_{OUT2}, u_{OUT3}) of the comparators (CMP1; CMP2, CMP3; CMP2', CMP3') associated with the first, second and third threshold values are evaluated and an error is registered if the output signals indicate that a threshold value (u_{E11}, u_{E21}, u_{E31}) has been exceeded, and/or
b) by means of the test sequence, the intensity of the radiation is increased to a level designed to generate output signals of the sensor- and reference elements (D2, D3, D3') that lie above the first and third threshold values (u_{E11}, u_{E31}), whereupon the output signals (u_{OUT1}, u_{OUT2}, u_{OUT3}) of the comparators (CMP1; CMP2, CMP3; CMP2', CMP3') associated with the first, second and third threshold values are evaluated and an error is registered if the output signals indicate that a threshold value (u_{E11}, u_{E21}, u_{E31}) has not been attained, and/or
c) during the inclination measurement, an error is registered if the output signal (u_{OUT2}) of the comparator (CMP2; CMP2') associated with the lower, second threshold value (U_{E21}) indicates that the second threshold value (U_{E21}) has not been attained and if the output signal (u_{OUT3}) of the comparator (CMP3; CMP3') associated with the higher, third threshold value (U_{E31}) indicates that the third threshold value (u_{E31}) has been exceeded, and/or
d) during the inclination measurement, an excessive intensity of the radiation is registered if the output signal (u_{OUT3}) of the comparator (CMP3; CMP3' ) associated with the higher, third threshold value (u_{E31}) indicates that the third threshold value (u_{E31}) has been exceeded, and/or
e) during the inclination measurement, an insufficient intensity of the radiation is registered if the output signals (u_{OUT1}, u_{OUT2}, u_{OUT3}) of all comparators (CMP1; CMP2, CMP3; CMP2', CMP3') indicate that their respective threshold values (u_{E11}, u_{E21}, u_{E31}) have not been attained.

6. Method according to claim 4 or 5, **characterized in that** the output signals (u_{OUT1}, u_{OUT2}, u_{OUT3}) of all of the comparators (CMP1; CMP2, CMP3; CMP2', CMP3') are processed in a processor (4), wherein
a) each time the first threshold value (u_{E11}) which indicates an out-of-level condition is not attained or is exceeded, an inclination counter is changed, respectively, towards a first or second limit value, and/or
b) each time the second threshold value (u_{E21}) which distinguishes a sufficient intensity from an insufficient intensity of the radiation is not attained, an intensity counter is changed in the direction from a third towards a fourth limit value, and/or
c) each time the third threshold value (u_{E31}) which indicates an excessive intensity of the radiation is exceeded, the intensity counter is changed in the direction from the fourth towards the third limit value, and/or
d) after an error has been registered during the test sequence, a function counter is changed in the direction towards a fifth limit value, and/or
e) after an error has been registered during the inclination measurement, the function counter is changed in the direction towards the fifth limit value or an error counter is changed in the direction towards a sixth limit value.

7. Method according to claim 6, **characterized in that**
a) after the first or second limit value has been reached, an inclination inside or outside the tolerance range is signaled and a measuring process is stopped if necessary, and/or
b) after the third or fourth limit value has been reached, the intensity of the radiation or, more specifically, the electrical power supplied to the radiating element (D1) is adjusted as needed, and/or
c) after the fifth or sixth limit value has been reached, an error corresponding to said fifth and/or sixth limit value is signaled and the measuring process is stopped if necessary.

8. Monitoring device (150) for performing the method according to one of the claims 1 to 7, wherein the monitoring device (150) is equipped with an inclination sensor (1) functioning according to the principle of a spirit level, said inclination sensor comprising a container (10) filled with a fluid (11) in which a bubble (12) is formed, wherein the position of the bubble (12) is measured optically by means of a radiating element (D1) that is arranged on a first side of the bubble (12) and serves to emit a radiation, and by means of a sensor element (D2) that is arranged on a second side, being opposite the first side, of the bubble (12) and serves to receive said radiation, wherein the radiating element (D1) and the sensor element (D2) together define the sensor axis (sx), wherein the sensor element (D2) on said second side is flanked by at least two reference elements (D3; D3') in respectively opposite positions from the sensor element, and wherein said reference elements serve to test whether the intensity of the radiation is within a permissible range, **characterized in that** inside the monitoring device (150) means for automatically performing a function test are present in order to verify that the monitoring device (150) is functioning correctly.

9. Monitoring device (150) according to claim 8, **characterized in that** the radiating element (D1) is designed to emit a radiation in the infrared range, and/or that the sensor element (D2) and the two reference elements (D3, D3') which are preferably arranged on a straight line passing through the sensor element (D2) are designed to selectively receive radiation in the infrared range, and/or that the two reference elements (D3, D3') are arranged in such a way that the radiation received by said reference elements is not passing through the bubble (12) as long as the latter is substantially centered on the sensor axis (sx).

10. Monitoring device (150) according to claim 8 or 9, **characterized in that** by means of a first comparator (CMP1) the output signal of the sensor element (D2) is compared to a first threshold value (U_{E11}) which represents a measure for determining whether the distance of the bubble (12) from the sensor axis (sx) is within the range corresponding to a permissible inclination, and that by means of second and third comparators (CMP2, CMP3; CMP2', CMP3') the output signals of the respectively associated reference elements (D3; D3') can each be compared to a lower, second threshold value (u_{E21}) and an upper, third threshold value (u_{E31}), wherein the two threshold values (u_{E21}, u_{E31}) define the permissible range of intensity of the radiation and thus the range of electrical power that needs to be supplied to the radiating element (D1) which is preferably a light-emitting diode.

11. Monitoring device (150) according to claim 10, **characterized in that** the output signals (u_{OUT1}, u_{OUT2}, u_{OUT3}) of all of the comparators (CMP1; CMP2, CMP3; CMP2', CMP3') are received by a processor (4) which is operable to:
a. change an inclination counter towards a first or second limit value each time the first threshold value (u_{E11}) which indicates an out-of-level condition is, respectively, not attained or exceeded, and/or
b. change an intensity counter in the direction from a third towards a fourth limit value each time the second threshold value (u_{E21}) which distinguishes a sufficient intensity from an insufficient intensity of the radiation is not attained, and/or
c. change the intensity counter in the direction from the fourth towards the third limit value each time the third threshold value (u_{E31}) which indicates an excessive intensity of the radiation is exceeded, and/or
d. change a function counter in the direction towards a fifth limit value after an error has been registered during the test sequence, and/or
e. change the function counter in the direction towards the fifth limit value or change an error counter in the direction towards a sixth limit value after an error has been registered during the inclination measurement.

12. Monitoring device (150) according to claim 11,
**characterized in that**
a) after the first or second limit value has been reached, an inclination inside or outside the tolerance range can be signaled by means of annunciator elements (51, 52) and/or an indicator unit (54) and the measurement process can be stopped if necessary; and/or
b) after the third or fourth limit value has been reached, the intensity of the radiation or, more specifically, the electrical power supplied to the radiating element (D1) can be changed accordingly, and/or
c) after the fifth or sixth limit value has been reached, an error corresponding, respectively, to the fifth or sixth limit value can be signaled by means of the annunciator elements (51, 52) and or the indicator unit (54) and the measurement process can be stopped if necessary.

13. Monitoring device (150) according to one of the claims 8 to 12, **characterized in that** the position of the bubble (12) in the inclination sensor (1) can in addition be checked visually.

14. Measuring instrument, in particular a balance (1000), with a monitoring device (150) according to one of the claims 8 to 13.

15. Measuring instrument according to claim 14, **characterized in that** the inclination sensor (1) which is connected to the monitoring device (150) can be mounted on the housing (1001) of the measuring instrument in such a manner that the deviation of the bubble from the sensor axis (sx) is visible.

## Revendications

1. Procédé pour surveiller l'orientation d'un dispositif de mesure, en particulier d'une balance (1000), au moyen d'un dispositif de surveillance (150) équipé d'un capteur d'inclinaison (1) travaillant selon le principe d'un niveau à bulle d'air, qui présente un réservoir (10), lequel est rempli d'un liquide (11) en formant une bulle (12), la position de la bulle (12) étant mesurée de façon optique au moyen d'un élément de rayonnement (D1) disposé sur un premier côté de la bulle (12) et servant à l'émission d'un rayonnement et d'un élément de détection (D2) disposé sur le second côté, faisant face au premier élément, de la bulle (12) et servant à la réception du rayonnement, qui forme conjointement avec l'élément de rayonnement (D1) l'axe du capteur (sx), au moins un élément de référence (D3 ; D3') servant à la réception du rayonnement étant prévu sur le second côté, des deux côtés de l'élément de détection (D2), avec lesquels on vérifie si l'intensité du rayonnement se situe dans une plage autorisée, **caractérisé en ce que**, pour le contrôle du dispositif de surveillance (150), un test de fonction est effectué automatiquement à l'intérieur du dispositif de surveillance (150).

2. Procédé selon la revendication 1, **caractérisé en ce que** l'élément de rayonnement (D1) émet un rayonnement dans la zone infrarouge et/ou **en ce que** l'élément de détection (D2) et les deux éléments de référence (D3 ; D3'), qui sont disposés de préférence sur une droite passant par l'élément de détection (D2), sont conçus de façon sélective pour la réception du rayonnement dans la zone infrarouge et/ou **en ce que** les deux éléments de référence (D3 ; D3') sont disposés de telle sorte que le rayonnement reçu ne passe pas par la bulle (12) dans le cas où celle-ci est disposée de façon concentrique par rapport à l'axe du capteur (sx).

3. Procédé selon la revendication 1 ou 2, **caractérisé en ce que** le signal de sortie de l'élément de détection (D2) est comparé au moyen d'un premier comparateur (CMP1) avec une première valeur seuil (u_{E11}), qui est une référence pour la distance, située dans la plage d'une inclinaison autorisée, de la bulle (12) à l'axe du capteur (sx), et **en ce que** les signaux de sortie des deux éléments de référence (D3 ; D3') sont comparées au moyen respectivement d'un second et d'un troisième comparateurs (CMP2, CMP3 ; CMP2', CMP3') avec une seconde valeur seuil (u_{E21}) inférieure et une troisième valeur seul (u_{E31}) supérieure, les deux valeurs seuils (u_{E21} et u_{E31}) déterminant la plage de l'intensité autorisée du rayonnement et donc la plage de la puissance électrique à amener à l'élément de rayonnement (D1), de préférence une diode électroluminescente.

4. Procédé selon la revendication 1, 2 ou 3, **caractérisé en ce que** le rayonnement est émis de façon périodique ou apériodique par impulsions, de préférence à des intervalles de 5 ms jusqu'à 15 ms et avec des amplitudes de 5 µs à 15 µs et/ou **en ce que** la puissance électrique à amener à l'élément de rayonnement (D1) est déterminée par la modification de la hauteur des impulsions.

5. Procédé selon la revendication 3 ou 4, **caractérisé en ce que** pour le contrôle du dispositif de surveillance,
a) l'intensité du rayonnement est augmentée au moyen d'une séquence de test jusqu'à une valeur qui devrait déclencher des signaux de sortie, situés au-dessous de la seconde valeur seuil (u_{E21}), des éléments de détection et de référence (D2, D3, D3'), après quoi les signaux de sortie (u_{OUT1}, u_{OUT2}, u_{OUT3}) des comparateurs (CMP1 ; CMP2, CMP ; CMP2', CMP3') spécifiques à la première, à la seconde et à la troisième valeurs seuils sont testés et une erreur est enregistrée en cas de dépassement d'une valeur seuil (U_{E11}, u_{E21}, u_{E31}) et/ou **en ce que**
b) l'intensité du rayonnement est augmentée au moyen de la séquence test jusqu'a une valeur qui devrait déclencher des signaux de sortie, situés au-dessus de la première et de la troisième valeurs seuils (u_{E11}, u_{E31}), des éléments de détection et de référence (D2, D3, D3'), après quoi les signaux de sortie (u_{OUT1}, u_{OUT2}, u_{OUT3}) des comparateurs (CMP1 ; CMP2, CMP3 ; CMP2', CMP3') spécifiques à la première, à la seconde et à la troisième valeurs seuils, sont testés et une erreur est enregistrée en cas de sous-dépassement d'une valeur seuil (U_{E11}, u_{E21}, u_{E31}) et/ou **en ce que**
c) une erreur est enregistrée pendant la mesure d'inclinaison dans le cas où le signal de sortie (u_{OUT2}) du comparateur (CMP2 ; CMP2') spécifique à la seconde valeur seuil (u_{E21}) inférieure indique un sous-dépassement de la seconde valeur seuil (u_{E21}) et le signal de sortie (u_{OUT3}) du comparateur (CMP3 ; CMP3') spécifique à la troisième valeur seuil (u_{E31}) supérieure indique un dépassement de la troisième valeur seuil (u_{E31}) et/ou **en ce que**
d) une intensité trop élevée du rayonnement est enregistrée pendant la mesure d'inclinaison dans le cas où le signal de sortie (u_{OUT3}) du comparateur (CMP3 ; CMP3') spécifique à la troisième valeur seuil (u_{E31}) supérieure indique un dépassement de la troisième valeur seuil (u_{E31}) et/ou **en ce que**
e) une intensité trop basse du rayonnement est enregistrée pendant la mesure d'inclinaison dans le cas où les signaux de sortie (u_{OUT1}, u_{OUT2}, u_{OUT3}) de tous les comparateurs (CMP1 ; CMP2, CMP3 ; CMP2', CMP3') indiquent un sous-dépassement des valeurs seuils (u_{E11}, u_{E21}, u_{E31}) spécifiques.

6. Procédé selon la revendication 4 ou 5, **caractérisé en ce que** les signaux de sortie (u_{OUT1}, u_{OUT2}, u_{OUT3}) de tous les comparateurs (CMP1 ; CMP2, CMP3 ; CMP2', CMP3') sont traités dans un processeur (4), moyennant quoi
a) après chaque sous-dépassement ou dépassement de la première valeur seuil (u_{E11}) indiquant une erreur d'inclinaison, un compteur d'inclinaison est modifié en direction d'une première ou d'une seconde valeur limite, et/ou
b) après chaque sous-dépassement de la seconde valeur seuil (u_{E21}) indiquant une intensité trop basse du rayonnement, un compteur d'intensité est modifié d'une troisième valeur limite en une quatrième valeur limite, et/ou
c) après chaque dépassement de la troisième valeur seuil (u_{E31}) indiquant une intensité trop élevée, le compteur d'intensité est modifié en passant de la quatrième valeur limite à la troisième limite, et/ou
d) après l'enregistrement d'une erreur pendant la séquence test, un compteur de fonction est modifié en direction d'une cinquième valeur limite, et/ou
e) après l'enregistrement d'une erreur pendant la mesure d'inclinaison, le compteur de fonction est modifié en direction d'une cinquième valeur limite ou un compteur d'erreurs est modifié en direction d'une sixième valeur limite.

7. Procédé selon la revendication 6, **caractérisé en ce que**
a) après l'atteinte de la première ou de la seconde valeur limite, une inclinaison située à l'intérieur ou à l'extérieur de la plage de tolérance est signalée et un processus de mesure est éventuellement arrêté, et/ou **en ce que**
b) après l'atteinte de la troisième ou de la quatrième valeur limite, l'intensité du rayonnement ou la puissance électrique amenée à l'élément de rayonnement (D1) est modifiée en conséquence, et/ou **en ce que**
c) après l'atteinte de la cinquième ou de la sixième valeur limite, une erreur correspondante est signalée et le processus de mesure est éventuellement arrêté.

8. Dispositif de surveillance (150) pour mettre en oeuvre le procédé selon l'une quelconque des revendications 1 à 7 avec un capteur d'inclinaison
(1) travaillant selon le principe d'un niveau à bulle d'air, qui présente un réservoir (10) qui est rempli d'un liquide (11) en formant une bulle (12), la position de la bulle (12) pouvant être mesurée de façon optique au moyen d'un élément de rayonnement (D1) disposé sur un premier côté de la bulle (12) et servant à l'émission d'un rayonnement et d'un élément de détection (D2) disposé sur le second côté, opposé au premier, de la bulle (12) et servant à la réception du rayonnement, qui forme conjointement avec l'élément de rayonnement (D1) l'axe du capteur (sx), au moins à chaque fois un élément de référence (D3 ; D3') servant à la réception du rayonnement étant disposé sur le second côté des deux côtés de l'élément de détection, au moyen desquels on peut vérifier si l'intensité du rayonnement est située dans une plage autorisée, **caractérisé en ce que** des moyens destinés à la mise en oeuvre automatique d'un test de fonction du dispositif de surveillance (150) sont présents à l'intérieur du dispositif du surveillance (150).

9. Dispositif de surveillance (150) selon la revendication 8, **caractérisé en ce que** l'élément de rayonnement (D1) est prévu pour l'émission d'un rayonnement dans la plage infrarouge et/ou **en ce que** l'élément de détection (D2) et les deux éléments de référence (D3 ; D3'), qui sont disposés de préférence sur une droite passant par l'élément de détection (D2), sont conçus de façon sélective pour la réception du rayonnement dans la plage infrarouge et/ou **en ce que** les deux éléments de référence (D3 ; D3') sont disposés de telle sorte que le rayonnement reçu ne passe pas par la bulle (12) si celle-ci est située sensiblement de façon concentrique par rapport à l'axe du capteur (sx).

10. Dispositif de surveillance (150) selon la revendication 8 ou 9, **caractérisé en ce que** le signal de sortie de l'élément de détection (D2) peut être comparé au moyen d'un premier comparateur (CMP1) avec une première valeur seuil (u_{E11}), qui est une référence pour la distance, située dans la plage d'une inclinaison autorisée, de la bulle (12) à l'axe du capteur (sx) et **en ce que** les signaux de sortie des deux éléments de référence (D3 ; D3') peuvent être comparés chacun au moyen d'un second et d'un troisième comparateurs (CMP2, CMP3 ; CMP2', CMP3') respectivement avec une seconde valeur seuil (u_{E21}) inférieure et une troisième valeur seuil (u_{E31}) supérieure, les deux valeurs (u_{E2}, et u_{E31}) déterminant la plage de l'intensité autorisée du rayonnement et donc la plage de la puissance électrique à amener à l'élément de rayonnement (D1), de préférence une diode électroluminescente.

11. Dispositif de surveillance (150) selon la revendication 10, **caractérisé en ce que** les signaux de sortie (u_{OUT1}, u_{OUT2}, u_{OUT3}) de tous les comparateurs (CMP1, CMP2, CMP3 ; CMP2', CMP3') peuvent être amenés à un processeur (4) au moyen duquel
a) après chaque sous-dépassement ou dépassement d'une première valeur seuil (U_{E11}) indiquant une erreur d'inclinaison, un compteur d'inclinaison peut être modifié en direction d'une première ou d'une seconde valeur limite et/ou **en ce que**
b) après chaque sous-dépassement de la seconde valeur seuil (u_{E21}) indiquant une intensité trop basse du rayonnement, un compteur d'intensité peut être modifié d'une troisième valeur limite vers une quatrième valeur limite et/ou
c) après chaque dépassement de la troisième valeur seuil (u_{E31}) indiquant une intensité trop élevée, le compteur d'intensité peut être modifié en passant de la quatrième valeur limite à la troisième valeur limite, et/ou **en ce que**
d) après l'enregistrement d'une erreur pendant la séquence test, un compteur de fonction peut être modifié en direction d'une cinquième valeur limite, et/ou
e) après l'enregistrement d'une erreur pendant la mesure d'inclinaison, le compteur de fonction peut être modifié en direction de la cinquième valeur limite ou un compteur d'erreurs peut être modifié en direction d'une sixième valeur limite.

12. Dispositif de surveillance (150) selon la revendication 11, **caractérisé en ce que**
a) après l'atteinte de la première ou de la seconde valeur limite, une inclinaison située à l'intérieur ou à l'extérieur de la plage de tolérance peut être signalée au moyen d'éléments d'affichage (51, 52) et/ou d'une unité d'affichage (54) et le processus de mesure peut être éventuellement arrêté ; et/ou
b) après l'atteinte de la troisième ou de la quatrième valeur limite, l'intensité du rayonnement ou la puissance électrique amenée à l'élément de rayonnement (D1) peut être modifiée en conséquence ; et/ou **en ce que**
c) après l'atteinte de la cinquième ou de la sixième valeur limite, une erreur correspondante peut être signalée au moyen des éléments d'affichage (51, 52) et/ou de l'unité d'affichage (54) et le processus de mesure peut être éventuellement arrêté.

13. Dispositif de surveillance (150) selon l'une quelconque des revendications 8 à 12, **caractérisé en ce que** la position de la bulle (12) peut être contrôlée en supplément à l'oeil dans le capteur d'inclinaison (1).

14. Dispositif de mesure, en particulier balance (1000), avec un dispositif de surveillance (150) selon l'une quelconque des revendications 8 à 13.

15. Dispositif de mesure selon la revendication 14, **caractérisé en ce que** le capteur d'inclinaison (1) raccordé au dispositif de surveillance (150) est monté sur le boîtier (1001) du dispositif de mesure de telle sorte que l'écart de la bulle à l'axe du capteur (sx) est visible.
